# FASCICULE DE BREVET EUROPEEN

(11) **EP 1 610 352 B1**
(45) Date de publication et mention de la délivrance du brevet: **09.07.2008**
(21) Numéro de dépôt: 05104034.3
(22) Date de dépôt: 13.05.2005
(51) Int. Cl.: H01H 1/58, H01F 38/26

(54) **Dispositif de sectionnement d'energie electrique**
Elektrische Trennvorrichtung
Electric circuit breaker

(30) Priorité: 18.05.2004 FR 0450979
(43) Date de publication de la demande: 28.12.2005
(73) Titulaire: AREVA T&D AG, 5036 Oberentfelden (CH)
(72) Inventeur: Andermatt, Ernst, 5723, Teufenthal (CH); Doessegger, André, 5036, Oberentfelden (CH); Pohlink, Karsten, 5035, Unterentfelden (CH)
(74) Mandataire: Poulin, Gérard

(56) Documents cités:
- US-A- 3 710 247
- US-A- 3 964 814
- US-B1- 6 717 089

## Description

### DOMAINE TECHNIQUE

La présente invention concerne un dispositif de sectionnement d'énergie électrique. Par dispositif de sectionnement électrique, on entend un sectionneur, un disjoncteur, un dispositif de mise à la terre, un interrupteur.

L'invention s'applique tout particulièrement à un sectionneur simplifié haute tension qui est capable de séparer et/ou de connecter entre eux deux parties de circuit haute tension qui ont un petit courant de service (par exemple inférieur à 1 ampère). Un tel appareil fonctionne hors tension. On rappelle qu'un sectionneur est un dispositif destiné à isoler une partie d'un circuit électrique, que l'on veut mettre hors fonctionnement ou sur laquelle on veut effectuer des travaux ou des mesures sans danger, du reste du circuit. Un tel sectionneur peut être utilisé notamment pour isoler électriquement un transformateur de tension inclus dans un poste électrique à isolation gazeuse (connu sous l'abréviation anglo-saxonne de GIS soit gas insulated substation) du reste du poste. Lors de tests de la valeur de la tension, on peut être amené à vouloir séparer le transformateur de tension du reste du poste électrique à isolation gazeuse.

Au sens des réseaux de transport et de distribution, les hautes tensions sont les tensions supérieures à environ 35 000 Volts à 36 000 Volts (en dessous il s'agit de moyenne tension).

Un poste électrique est une installation située à la jonction de lignes de transport et de distribution d'électricité, qui contient de l'appareillage de protection, de transformation et de sectionnement notamment, destiné à modifier certaines caractéristiques du réseau électrique auquel elle est reliée, en fonction des contraintes d'exploitation.

Le document US 6 717 089 décrit un dispositif selon le préambule de la revendication 1.

### ÉTAT DE LA TECHNIQUE ANTÉRIEURE

Il existe plusieurs solutions pour séparer un transformateur de tension du reste d'un poste électrique haute tension à isolation gazeuse. On peut insérer un sectionneur haute tension entre l'enroulement primaire (côté de la tension la plus haute) du transformateur de tension et le reste du poste électrique à isolation gazeuse. Cette solution est chère car toutes les caractéristiques du sectionneur ne sont pas exploitées. Par exemple, il n'est pas nécessaire de déconnecter et de reconnecter le transformateur en charge.

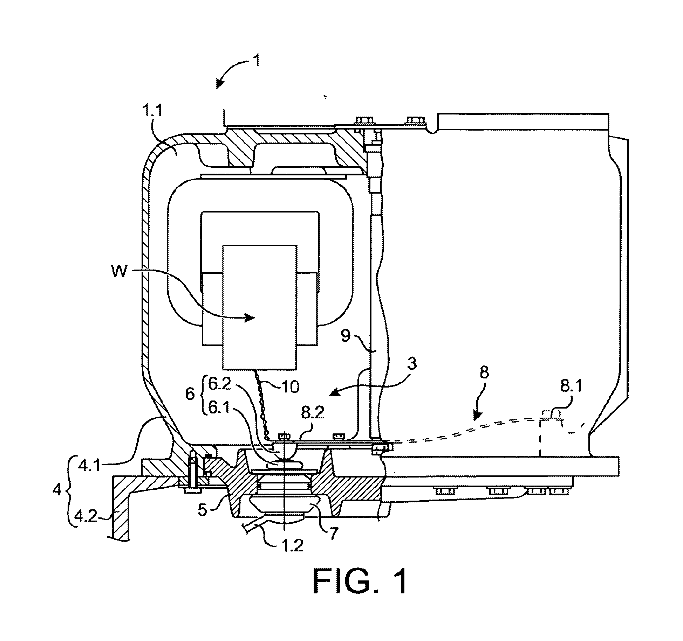

Une autre solution utilisée dans des applications moyenne tension est d'adjoindre au transformateur 1.1, qui est une partie d'un poste électrique 1 à isolation gazeuse, au moins un dispositif de sectionnement 3 simplifié comme illustré sur la figure 1. Le dispositif de sectionnement 3 a alors une fonction de sectionneur. Il est soit dans un état fermé, soit dans un état ouvert. Le poste électrique 1 est logé dans une enceinte étanche 4 généralement métallique destinée à être emplie de gaz d'isolation par exemple de l'hexafluorure de soufre SF₆.

Le transformateur 1.1 se trouve dans une première partie 4.1 de l'enceinte étanche 4. Le reste du poste électrique, schématisé sur la figure 1 par un conducteur 1.2, se trouve dans une autre partie 4.2 de l'enceinte étanche 4.

Le transformateur 1.1 comporte un ou plusieurs jeux d'enroulements W avec pour chaque jeu un enroulement primaire (côté de la tension la plus haute) et au moins un enroulement secondaire (côté de la tension la plus basse). Sur la figure, on ne peut distinguer l'enroulement primaire de l'enroulement secondaire. Les enroulements portent globalement la référence W. Les transformateurs monophasés n'ont qu'un seul jeu d'enroulements et les transformateurs multiphasés en ont plusieurs. Dans l'exemple de la figure 1, on suppose que le transformateur est triphasé mais on ne voit qu'un seul jeu d'enroulements W.

Le dispositif de sectionnement 3 est logé dans la première partie d'enceinte 4.1, celle-ci entoure le transformateur 1.1. Une cloison diélectrique 5 sépare la première partie 4.1 de l'enceinte étanche 4 de l'autre partie 4.2 qui entoure le reste 1.2 du poste électrique à isolation gazeuse.

Le dispositif de sectionnement 3 comporte une ou plusieurs paires 6 de contacts 6.1, 6.2. Le nombre de paires 6 de contacts correspond au nombre de phases du transformateur. Chaque paire 6 comprend un contact fixe 6.1 et un contact mobile 6.2. Le contact fixe 6.1 est destiné à être relié au reste 1.2 du poste électrique 1 à isolement gazeux par l'intermédiaire d'un contact enfichable 7. Le contact enfichable 7 est enfiché dans la cloison diélectrique 5.

Le contact mobile 6.2 est destiné à être relié à l'enroulement primaire W du transformateur 1.1. Il se déplace pour ouvrir ou fermer le dispositif de sectionnement 3. Il est solidaire d'une lame souple diélectrique 8. Cette lame souple diélectrique 8 possède une extrémité fixe 8.1 et une extrémité libre 8.2. Elle est reliée entre les deux extrémités à une tige d'actionnement 9 accessible depuis l'extérieur de la première partie d'enceinte 4.1. Le déplacement de la tige d'actionnement 9 entraîne la lame souple 8 et donc permet la mise en contact électrique ou la séparation du contact mobile 6.2 avec le contact fixe 6.1 de chaque paire. La lame souple diélectrique 8 agit telle un ressort pour assurer le contact électrique.

La tige 9 est apte à être verrouillée dans deux positions extrêmes dans lesquelles le dispositif de sectionnement 6 est soit dans un état ouvert, soit dans un état fermé. Le contact mobile 6.2 est relié électriquement à l'enroulement primaire W du transformateur par un conducteur 10 souple à torons non isolés. La longueur du conducteur 10 est supérieure à l'espace séparant, dans une paire 6, le contact mobile 6.2 du point de fixation à l'enroulement lorsque la paire est en position fermée. Que le dispositif de sectionnement 6 soit dans l'état ouvert ou dans l'état fermé, le conducteur 10 suit une courbe dont les déplacements sont aléatoires.

L'inconvénient de cette configuration est qu'elle n'est pas fiable pour des applications à haute tension. Le gradient de tension à la surface du conducteur 10 est alors très important. Lors des manipulations, la forme de la courbe et sa position ne sont pas stables et reproductibles. On ne peut savoir à l'avance la position exacte que prendra le conducteur 10. Il risque de se trouver à proximité d'une zone à la masse ou d'un autre conducteur sous tension. Si un espace trop faible pour ce gradient de tension les sépare, il y a risque d'apparition d'arcs électriques entre le conducteur 10 et la zone à la masse ou entre deux conducteurs. Une destruction du dispositif de sectionnement 3 peut alors en découler.

### EXPOSÉ DE L'INVENTION

La présente invention a pour but de proposer un dispositif de sectionnement d'énergie électrique ne présentant pas les limitations et difficultés ci-dessus.

Un but est en particulier de proposer un dispositif de sectionnement d'énergie électrique simplifié qui soit fiable à haute tension.

Un autre but de l'invention est de proposer un dispositif de sectionnement bon marché dans un volume réduit.

Pour atteindre ces buts l'invention concerne plus précisément un dispositif de sectionnement destiné à séparer électriquement une première partie d'une seconde partie d'un circuit électrique, comportant :
au moins une paire de contacts dont un contact est mobile, cette paire de contacts ayant soit un état ouvert, soit un état fermé,
et un conducteur flexible fixé d'un côté au contact mobile et destiné à être fixé de l'autre côté à l'une des parties de circuit,
caractérisé en ce que
le conducteur comporte un tube électriquement conducteur au moins en surface, ayant une rigidité en flexion suffisamment faible pour se courber sans s'écraser et une rigidité en torsion suffisamment grande pour prendre une forme et une position sensiblement reproductibles au moins dans l'état fermé.

Pour que le tube puisse se courber sans s'écraser, il est préférable que son rayon de courbure minimum admissible soit inférieur ou égal à environ 3 fois le diamètre extérieur du tube flexible.

Pour que le tube puisse prendre la bonne position au moins dans l'état fermé, alors que le contact mobile est construit autour d'un premier axe, il est préférable que chaque extrémité du tube flexible soit fixée selon un second axe sensiblement parallèle ou confondu avec le premier axe, les deux seconds axes étant décalés l'un par rapport à l'autre.

Dans le même but, la longueur du tube flexible est supérieure à une distance séparant un point de fixation du tube flexible au contact mobile d'un point de fixation du tube flexible à la partie de circuit électrique lorsque la paire de contacts est dans l'état fermé.

Pour éviter l'apparition de décharges électriques indésirables, il est préférable que le diamètre extérieur du tube flexible soit compris entre environ 10 et 60 millimètres.

Le tube flexible peut être formé d'un corps tubulaire flexible et d'une gaine extérieure de fils entrelacés.

Le corps tubulaire peut être métallique ou en matière plastique, il peut être annelé. Il peut être recouvert d'une couche conductrice.

La gaine est métallique.

Au moins une des extrémités du tube flexible est équipée d'un raccord de fixation.

Ce raccord peut être un raccord à visser.

Ce raccord de fixation peut comporter intérieurement une douille pivotante, ce qui permet au tube flexible de se vriller de manière appropriée lorsque son rayon de courbure varie lors d'un mouvement du contact mobile.

Dans un mode de réalisation, le mouvement du contact mobile se fait sensiblement dans la direction de son axe.

En variante, le mouvement du contact mobile peut se faire dans une direction sensiblement perpendiculaire à son axe.

Pour assurer le déplacement du contact mobile, ce dernier peut être monté sur un support diélectrique en forme de barre sensiblement cylindrique apte à être déplacée le long de son axe.

La présente invention concerne également un transformateur de tension comportant dans une enceinte au moins un jeu d'enroulements et un dispositif de sectionnement d'énergie électrique ainsi caractérisé.

Des moyens de déplacement du contact mobile sont accessibles de l'extérieur de l'enceinte.

Le transformateur peut être monophasé ou multiphasé.

La présente invention concerne également un poste électrique à isolation gazeuse qui comporte dans une enceinte étanche au moins un transformateur de tension ainsi caractérisé, une partie de l'enceinte étanche servant d'enceinte au transformateur de tension.

L'autre contact de la paire du dispositif de sectionnement est un contact fixe monté sur une cloison diélectrique qui sépare la partie de l'enceinte étanche servant d'enceinte au transformateur de tension du reste de l'enceinte étanche.

### BRÈVE DESCRIPTION DES DESSINS

La présente invention sera mieux comprise à la lecture de la description d'exemples de réalisation donnés, à titre purement indicatif et nullement limitatif, en faisant référence aux dessins annexés sur lesquels :
- la figure 1 illustre un dispositif de sectionnement de l'art antérieur monté dans un transformateur de tension moyenne tension ;
- les figures 2A, 2B montrent un premier mode de réalisation d'un dispositif de sectionnement selon l'invention respectivement dans son état ouvert et fermé ;
- la figure 3 montre un mode de réalisation du tube flexible ;
- les figures 4A, 4B montrent un second mode de réalisation d'un dispositif de sectionnement selon l'invention respectivement dans son état fermé et ouvert.

Des parties identiques, similaires ou équivalentes des différentes figures décrites ci-après portent les mêmes références numériques de façon à faciliter le passage d'une figure à l'autre.

Les différentes parties représentées sur les figures ne le sont pas nécessairement selon une échelle uniforme, pour rendre les figures plus lisibles.

### EXPOSÉ DÉTAILLÉ DE MODES DE RÉALISATION PARTICULIERS

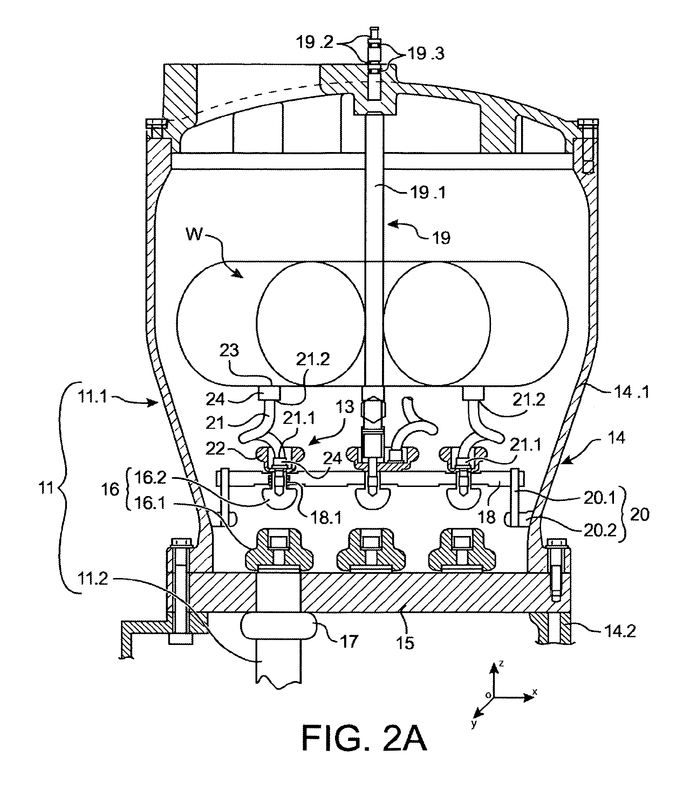

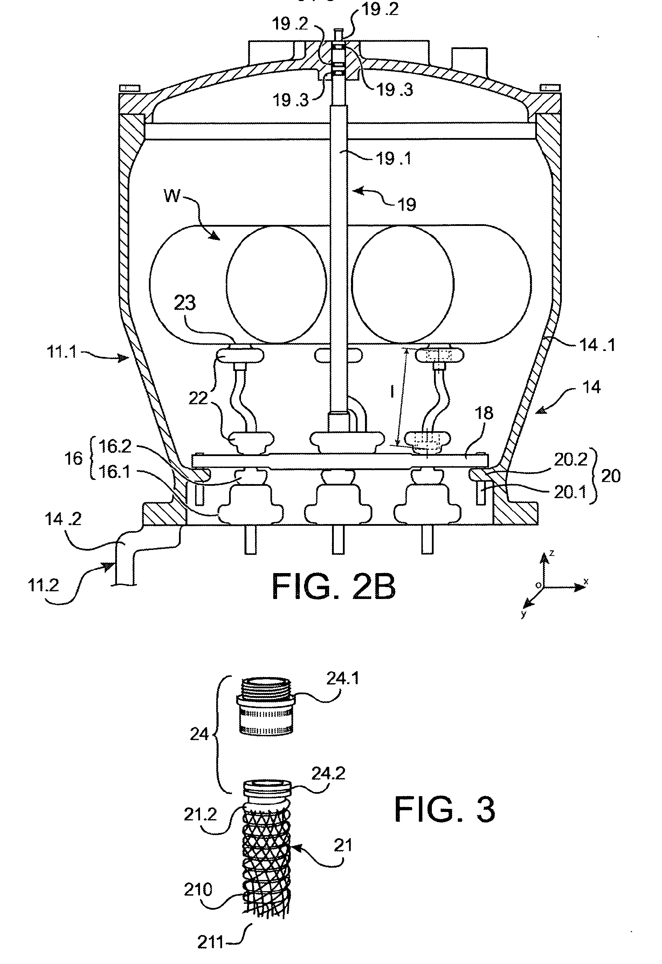

On se réfère aux figures 2A, 2B qui montrent un premier mode de réalisation d'un dispositif de sectionnement selon l'invention respectivement dans un état ouvert et dans un état fermé. Le dispositif de sectionnement est destiné à séparer électriquement une première partie 11.1 d'une seconde partie 11.2 d'un circuit électrique 11 haute tension.

Dans cet exemple, la première partie 11.1 du circuit électrique est schématisée par un transformateur de tension. Le circuit électrique 11 est une partie d'un poste électrique haute tension à isolation gazeuse. La seconde partie 11.2 du circuit électrique 11 est connectée au reste du poste électrique par un conducteur schématisé par une barre cylindrique.

D'autres applications pour le dispositif de sectionnement de l'invention sont bien sûr possibles.

Le circuit électrique 11 est placé dans une enceinte étanche 14 destinée à être emplie d'un gaz d'isolation par exemple l'hexafluorure de soufre SF₆.

Le transformateur 11.1 se trouve dans une première partie 14.1 de l'enceinte étanche 14. Le reste du circuit électrique 11.2 se trouve dans l'autre partie 14.2 de l'enceinte étanche 14. Le transformateur 11.1 comporte, comme dans l'exemple précédent, un ou plusieurs jeux d'enroulements W avec, pour chaque jeu W, un enroulement primaire et au moins un enroulement secondaire. On suppose ici encore que le transformateur 11.1 est triphasé, seuls deux des jeux W d'enroulements sont visibles, le troisième est caché. Dans un tel transformateur de tension, les jeux d'enroulements W sont arrangés en triangle sensiblement dans la partie médiane de la première partie de l'enceinte 14.1. S'il n'y a qu'un seul jeu d'enroulements, ce dernier sera localisé sensiblement au centre de la partie médiane de la première partie de l'enceinte 14.1.

Le dispositif de sectionnement 13 objet de l'invention est logé également dans la première partie 14.1 de l'enceinte 14. Une cloison 15 diélectrique étanche sépare la première partie 14.1 de l'enceinte étanche 14 de l'autre partie 14.2 de l'enceinte étanche 14. Cette cloison 15 sert de fond à la première partie de l'enceinte 14.1. Elle s'étend sensiblement dans le plan xoy.

Le dispositif de sectionnement 13 comporte une ou plusieurs paires 16 de contacts 16.1, 16.2. Le nombre de paires de contacts est égal au nombre de phases du transformateur. Sur les figures 2A, 2B, on distingue trois paires de contacts. Chacune des paires 16 de contacts comporte un contact fixe 16.1 et un contact mobile 16.2. Lorsque les contacts 16.1, 16.2 d'une paire sont en contact électrique, la paire 16 de contacts est dans un état fermé et le dispositif de sectionnement également (figure 2B). Lorsque les contacts 16.1, 16.2 d'une paire sont séparés l'un de l'autre, la paire 16 est dans un état ouvert et le dispositif de sectionnement également (figure 2A).

Le contact fixe 16.1 d'une paire est destiné à être relié électriquement au reste 11.2 du poste électrique à isolement gazeux 11 par l'intermédiaire d'un contact enfichable 17. Le contact enfichable 17 et le contact fixe 16.1 sont fixés sur la cloison diélectrique 15. Le contact fixe 16.1 est façonné de manière appropriée pour être compatible avec les exigences d'isolation du poste électrique, et avec la valeur du courant électrique continu qui va le parcourir (par exemple 0,1 A ou 0,01 A). Le contact fixe 16.1 est construit autour d'un axe dirigé selon z.

Le contact mobile 16.2 d'une paire 16 est fixé sur un support diélectrique rigide 18, en forme de traverse. Dans ce mode de réalisation, il fait face au contact fixe 16.1 de sa paire quel que soit l'état du dispositif de sectionnement. Il est également construit autour d'un axe dirigé selon z. Les contacts fixe et mobile 16.1, 16.2 d'une paire 16 sont coaxiaux.

La fixation du contact mobile 16.2 sur le support 18 est élastique en vue d'ajuster la force de contact prenant naissance lorsque les contacts mobile et fixe d'une paire sont fermés. Cette fixation peut se faire via un ressort hélicoïdal 18.1, ce qui rend le contact mobile 16.2 rétractile.

Le support diélectrique 18 coopère avec des moyens de déplacement 19 du contact mobile 16.2. Ces moyens de déplacement 19 comportent une tige 19.1 dont une extrémité est reliée au support diélectrique 18 et dont l'autre extrémité est accessible de l'extérieur de la première partie 14.1 de l'enceinte 14. Elle est destinée à être poussée ou tirée dans un mouvement de va et vient entre deux positions extrêmes dans la direction z. Lorsqu'on la pousse, on met le dispositif de sectionnement dans son état fermé, lorsqu'on la tire on met le dispositif de sectionnement dans son état ouvert. L'extrémité de la tige 19.1, qui est accessible de l'extérieur, peut être couplée à un outil approprié (non représenté), par exemple de type poignée, pour faciliter l'actionnement. Cet actionnement peut être manuel via l'outil. La tige 19.1 se trouve sensiblement au centre de la première partie d'enceinte 14.1 et passe entre les jeux W d'enroulements agencés en triangle ou plus généralement disposés le long de la paroi de la première partie d'enceinte 14.1.

Des moyens d'étanchéité 19.3 sont prévus pour conserver l'étanchéité au niveau de la sortie de la tige.

Dans cet exemple, le support diélectrique 18 s'étend selon le plan xoy d'un repère (o, xyz), et la tige est dirigée sensiblement perpendiculairement au plan du support diélectrique 18 c'est-à-dire selon z. Les moyens de déplacement 19 peuvent être équipés de moyens de verrouillage 19.2 pour verrouiller le support 18 dans les deux positions extrêmes correspondant chacune à un des deux états du dispositif de sectionnement 16. Le verrouillage peut se faire au moyen de gorges 19.2 creusée autour de la tige 19.1, le bord du trou de la première partie d'enceinte par lequel sort la tige 19.1 venant se loger dans une gorge 19.2.

Le support 18 est équipé de moyens de guidage 20. Les moyens de guidage 20 peuvent être localisés aux deux extrémités du support 18 et être réalisés par des ensembles goujons-logements qui coulissent l'un dans l'autre. Les goujons 20.1 peuvent être solidaires du support 18 et les logements 20.2 portés par la paroi de la première partie de l'enceinte 14.1 ou vice-versa.

Un tube flexible 21 électriquement conducteur au moins en surface, est fixé à une première extrémité 21.1, au contact mobile 16.2 de chaque paire de contacts 16 et est destiné à être fixé à une seconde extrémité 21.2 à un enroulement primaire W (côté de la tension la plus haute) du transformateur de tension 11.1 via une borne 23. La première extrémité 21.1 du tube flexible 21 et le contact mobile 16.2 se trouvent sur des faces opposées du support 18. Le tube flexible 21 sert à relier électriquement l'enroulement primaire W du transformateur de tension 11.1 au contact mobile 16.2 du dispositif de sectionnement 16. Au moins une des extrémités 21.1 du tube flexible 21 est protégée par un écran de blindage 22 qui l'entoure et dont la forme appropriée permet de maîtriser à cet endroit le champ électrique. Il n'y a qu'un seul écran 22 sur la figure 2A alors qu'il y en deux sur la figure 2B.

Le tube flexible 21 possède une rigidité en flexion suffisamment faible pour pouvoir se courber élastiquement sans s'écraser et une rigidité en torsion suffisamment grande pour pouvoir prendre une forme et une position sensiblement reproductibles au moins dans l'état fermé de la paire 16 de contacts et donc du dispositif de sectionnement. Il est préférable que la forme et la position soient aussi sensiblement reproductibles dans l'état ouvert du dispositif de sectionnement.

Cette reproductibilité n'existait pas dans les dispositifs de coupure de l'art antérieur tels que celui représenté sur la figure 1. Cette absence de reproductibilité rendait le dispositif de sectionnement peu fiable.

Le rayon de courbure minimum admissible du tube flexible 21 est inférieur ou égal à trois fois son diamètre extérieur. De la sorte le conducteur flexible 21 suivra une circonvolution à grand rayon de courbure (dite naturelle) entre ses deux extrémités lorsque le dispositif de sectionnement est fermé et une circonvolution à plus petit rayon de courbure (dite forcée) lorsque le dispositif de sectionnement est ouvert. Dans cette dernière position, le rayon de courbure que prend le tube flexible 21 est plus grand que le rayon de courbure minimum.

Au niveau de chacune de ses extrémités 21.1, 21.2, le tube flexible 21 est fixé selon un axe qui est parallèle ou confondu avec l'axe du contact mobile 16.2 auquel il est relié. Un décalage existe entre l'axe de la première extrémité 21.1 et l'axe de la seconde extrémité 21.2 du tube flexible 21. Dans ce mode de réalisation, ce décalage est sensiblement constant quel que soit l'état du dispositif de sectionnement. Ce décalage peut être compris entre environ 4 et 10 fois le diamètre extérieur du tube flexible 21. La longueur du tube flexible 21 est légèrement plus grande que la distance I séparant le point de fixation du tube flexible 21 sur l'enroulement W et le contact mobile 16.2 lorsque le dispositif de sectionnement est fermé. Typiquement cette longueur vaut environ 1,1 à 1,2 fois la valeur de la distance I. Dans une configuration triphasée, les trois bornes 23 de fixation aux enroulements sont disposées en triangle dans le plan xoy. La distance I montrée sur la figure 2B est une projection sur le plan zox.

En fait, la longueur du tube flexible et le décalage sont optimisés pour que le tube suive la circonvolution naturelle lorsque le dispositif de sectionnement est fermé et la circonvolution forcée lorsque le dispositif de sectionnement est ouvert.

On peut maintenant se référer à la figure 3 qui montre un exemple d'un tube flexible 21. Le tube flexible peut être formé d'un corps tubulaire flexible 210 gainé extérieurement d'une gaine 211 de fils entrelacés. Ces fils sont métalliques. Le corps tubulaire 210 peut être annelé et formé d'un profil enroulé en hélice, ce profil peut être obtenu à partir d'un feuillard d'acier laminé à froid galvanisé. Les fils de la gaine 211 peuvent être également en acier galvanisé ou étamé, ou en cuivre étamé. La gaine 211 donne au tube une bonne conductibilité électrique sensiblement constante. On peut utiliser par exemple des tubes de protection en vente sur le marché utilisables dans des applications hydrauliques ou pneumatiques ou pour la protection de fils et câbles basse tension.

En variante le tube flexible pourrait être réalisé en matériau diélectrique par exemple en matière plastique gainé extérieurement de matériau conducteur tel que des fils entrelacés de cuivre étamé ou en matière plastique recouverte d'une couche mince conductrice.

Le diamètre extérieur du tube flexible est choisi suffisamment grand pour éviter au tube flexible d'être le siège de décharges partielles. Ce n'était pas le cas dans l'art antérieur puisqu'un simple câble toronné assurait la liaison entre le contact mobile du dispositif de sectionnement et le transformateur de tension. Typiquement le diamètre extérieur du tube flexible sera compris entre environ 10 et 60 millimètres.

Le dispositif de sectionnement est adapté pour des applications à faible courant de service par exemple inférieur au dixième d'ampère si la surface conductrice a une résistance inférieure à 0,1 Ω/m. A sections conductrices égales, le tube flexible du dispositif de sectionnement de l'invention aura une surface extérieure beaucoup plus grande que le conducteur toronné du dispositif de sectionnement de la figure 1. Il y a donc moins de risque d'engendrer des décharges électriques indésirables.

Au moins une extrémité 21.1, 21.2 du tube flexible 21 peut être équipée d'un raccord à visser 24. Sur la figure 3, un seul raccord 24 est montré. Ce raccord se fixe par vissage au tube flexible 21 et se fixe par vissage soit à la borne de l'enroulement 23 ou soit au contact mobile 16.2. Ce raccord 24 est électriquement conducteur, avantageusement en laiton, de manière à assurer à la fois une connexion mécanique et électrique du tube flexible 21. Le raccord 24 peut être avantageusement en deux parties. Une première partie forme le corps 24.1 du raccord, elle est destinée à se visser sur la borne de l'enroulement ou sur le contact mobile. La seconde partie est une douille 24.2 destinée à se visser dans le tube flexible 21 et à s'encliqueter à l'intérieur du corps 24.1. La douille 24.2 peut être pivotante pour laisser un peu de liberté au tube flexible 21 pour qu'il puisse se tordre pour faciliter sa courbure lors de l'ouverture et son redressement lors de la fermeture du dispositif de sectionnement. Par redressement on ne veut pas dire que le tube devient forcément rectiligne mais qu'il est moins courbé.

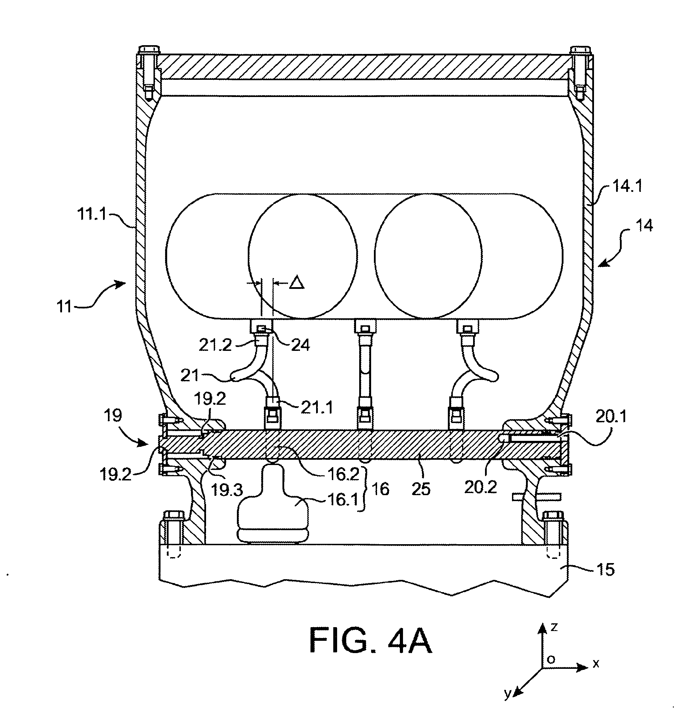

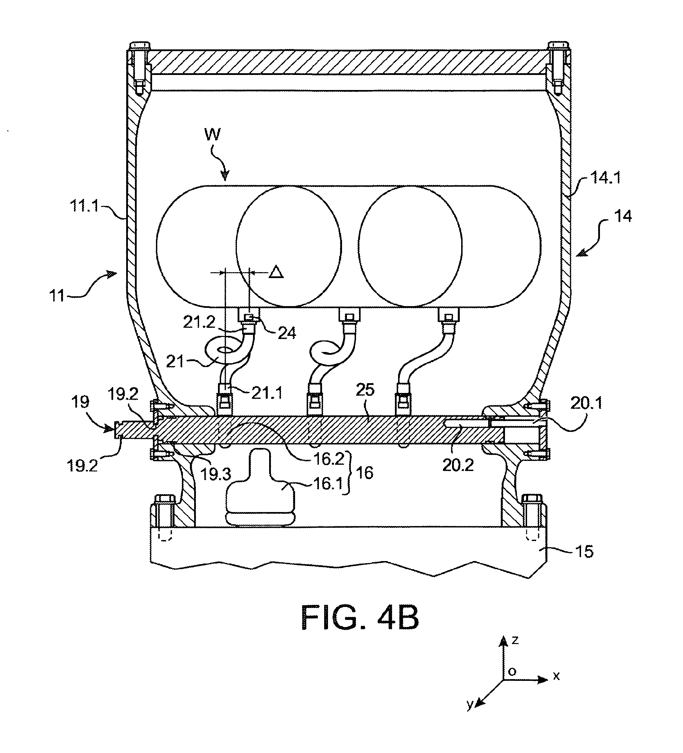

Les figures 4A, 4B illustrent de manière schématique un autre mode de réalisation d'un dispositif de sectionnement selon l'invention toujours dans une application de sectionneur. Ces figures sont dérivées des figures 2A, 2B, certains éléments n'ont pas été représentés dans un but de simplification. Il s'agit notamment du contact enfichable, du reste de l'enceinte étanche et de la seconde partie 11.2 du circuit électrique 11.

Sur la figure 4A, le dispositif de sectionnement est fermé et sur la figure 4B il est ouvert. La principale différence avec le mode de réalisation des figures 2 se situe au niveau du mouvement subi par le contact mobile 16.2 lorsque le dispositif de sectionnement passe d'un état à l'autre. Au lieu que le mouvement soit un mouvement de direction sensiblement parallèle à l'axe du contact fixe 16.1, le mouvement est maintenant sensiblement perpendiculaire à cet axe.

Le contact mobile 16.2 est solidaire d'un support 25 diélectrique qui maintenant prend la forme d'une barre sensiblement cylindrique.

L'axe du contact mobile est sensiblement perpendiculaire à l'axe de la barre 25. Mais maintenant le support 25 est apte à se déplacer le long de son axe, dans l'exemple selon l'axe x, dans un mouvement de va et vient entre les deux positions extrêmes.

Les axes des contacts fixe et mobile ne sont plus coaxiaux lorsque le dispositif de sectionnement est dans son état ouvert. Ils sont sensiblement parallèles.

Le support 25 a une extrémité qui est accessible de l'extérieur de la première partie d'enceinte 14.1 dédiée au transformateur de tension 11.1. Un ou plusieurs joints d'étanchéité 19.3 sont prévus au niveau de la sortie du support 25.

L'autre extrémité du support 25 se trouve dans la première partie d'enceint 14.1, elle est équipée de moyens de guidage 20 qui empêchent la barre 25 de tourner. Ces moyens de guidage peuvent consister en au moins un ensemble goujon-logement, le logement 20.2 étant porté par le support 25 et le goujon 20.1 par la paroi de la première partie d'enceinte 14.1 ou vice-versa.

Dans ce mode de réalisation, la tige d'actionnement n'est plus nécessaire. Le support 25 peut être actionné directement de l'extérieur de la première partie d'enceinte 14.1. En variante, une pièce prolongeant le support 25 pourrait être employée. Le support 25 peut comporter du côté accessible de l'extérieur de la première partie d'enceinte 14.1, des moyens de verrouillage 19.2, pour le maintenir dans les positions extrêmes. Ces moyens de verrouillage 19.2 peuvent prendre la forme de rainures par exemple. Cette configuration est préférée dans les transformateurs de tensions monophasés.

Sur la figure 4A, le support 25 est poussé dans la première partie d'enceinte. Chaque contact mobile 16.2 est en contact électrique avec le contact fixe de sa paire. La paire de contact est dans son état fermé. Les deux extrémités 21.1, 21.2 du tube flexible 21 sont fixées selon des axes dirigés selon z, et un décalage Δ existe entre ces deux axes. Dans une configuration triphasée, les trois raccords 24 sont disposés en triangle dans le plan xoy. Le décalage Δ montré sur les figures 4A, 4B est une projection sur l'axe x. Sur la figure 4B, le support 18 a été tiré vers la gauche, le contact mobile 16.2 de chaque paire 16 s'est décalé vers la gauche. La paire 16 de contacts est dans son état ouvert. Le décalage Δ entre les axes des deux extrémités 21.1, 21.2 du tube flexible 21 a varié mais subsiste. La courbure du tube flexible 21 a varié aussi d'un état à l'autre du dispositif de sectionnement.

Ce mode de réalisation est préféré dans des applications monophasées à cause du fait que la tige qui s'étend selon l'axe z dans la partie centrale de la première partie de l'enceinte est omise.

Ce mode de réalisation peut bien sûr être utilisé dans des applications multiphasées.

Un dispositif de sectionnement selon l'invention est particulièrement bon marché car il n'emploie que peu d'éléments. Le fait d'utiliser un tube flexible se trouvant sur le marché contribue à ce bas coût.

## Revendications

1. Dispositif de sectionnement destiné à séparer électriquement une première partie (11.1) d'une seconde partie (11.2) d'un circuit électrique (11), comportant :
au moins une paire de contacts (16) dont un contact (16.2) est mobile, cette paire de contacts ayant soit un état ouvert, soit un état fermé,
et un conducteur flexible (21) fixé d'un côté au contact mobile (16.2) et destiné à être fixé de l'autre côté à l'une des parties (11.1) de circuit électrique, **caractérisé en ce que**
le conducteur comporte un tube flexible (21), électriquement conducteur au moins en surface, ayant une rigidité en flexion suffisamment faible pour se courber sans s'écraser et une rigidité en torsion suffisamment grande pour prendre une forme et une position sensiblement reproductibles au moins dans l'état fermé.

2. Dispositif de sectionnement selon la revendication 1, **caractérisé en ce que** le tube flexible (21) a un rayon de courbure minimum admissible inférieur ou égal à 3 fois le diamètre extérieur du tube flexible.

3. Dispositif de sectionnement selon l'une des revendications 1 ou 2, dans lequel le contact mobile (16.2) est construit autour d'un premier axe, **caractérisé en ce que** chaque extrémité (21.1, 21.2) du tube flexible (21) est fixée selon un second axe sensiblement parallèle ou confondu avec le premier axe, les deux seconds axes étant décalés l'un par rapport à l'autre.

4. Dispositif de sectionnement selon l'une des revendications 1 à 3, **caractérisé en ce que** le tube flexible (21) a une longueur qui est supérieure à une distance (I) séparant un point de fixation du tube flexible (21) au contact mobile (16.2) d'un point de fixation du tube flexible (21) à la partie de circuit électrique (11.1) lorsque la paire de contacts est dans l'état fermé.

5. Dispositif de sectionnement selon l'une des revendications 1 à 4, **caractérisé en ce que** le diamètre extérieur du tube flexible (21) est compris entre environ 10 et 60 millimètres.

6. Dispositif de sectionnement selon l'une des revendications 1 à 5, **caractérisé en ce que** le tube flexible (21) comporte un corps tubulaire flexible (210) et une gaine (211) extérieure de fils entrelacés.

7. Dispositif de sectionnement selon la revendication 6, **caractérisé en ce que** le corps tubulaire flexible (210) est métallique.

8. Dispositif de sectionnement selon la revendication 6, **caractérisé en ce que** le corps tubulaire flexible (210) est en matière plastique.

9. Dispositif de sectionnement selon l'une des revendications 6 à 8, **caractérisé en ce que** le corps flexible (210) est annelé.

10. Dispositif de sectionnement selon l'une des revendications 8 ou 9, **caractérisé en ce que** le corps flexible est revêtu d'une couche conductrice.

11. Dispositif de sectionnement selon l'une des revendications 6 à 9, **caractérisé en ce que** la gaine (211) est métallique.

12. Dispositif de sectionnement selon l'une des revendications 1 à 11, **caractérisé en ce qu'**au moins une des extrémités (21.1, 21.2) du tube flexible est équipée d'un raccord de fixation (24).

13. Dispositif de sectionnement selon la revendication 12, **caractérisé en ce que** le raccord (24) est un raccord à visser.

14. Dispositif de sectionnement selon l'une des revendications 12 ou 13, **caractérisé en ce que** le raccord (24) comporte intérieurement une douille pivotante (24.2).

15. Dispositif de sectionnement selon l'une des revendications 1 à 14, dans lequel le contact mobile (16.2) est construit autour d'un axe, **caractérisé en ce que** le mouvement du contact mobile (16.2) est dirigé sensiblement selon son axe.

16. Dispositif de sectionnement selon l'une des revendications 1 à 14, dans lequel le contact mobile (16.2) est construit autour d'un axe, **caractérisé en ce que** le mouvement du contact mobile est dirigé sensiblement perpendiculairement à son axe.

17. Dispositif de sectionnement selon la revendication 16, dans lequel le contact mobile est monté sur un support diélectrique (25), **caractérisé en ce que** le support (18) est une barre sensiblement cylindrique apte à être déplacée le long de son axe.

18. Transformateur de tension comportant dans une enceinte (14.1) au moins un jeu (W) d'enroulements, **caractérisé en ce qu'**il contient dans l'enceinte un dispositif de sectionnement selon l'une des revendications précédentes.

19. Transformateur de tension selon la revendication 18, **caractérisé en ce que** des moyens de déplacement (19) du contact mobile (16.2) sont accessibles de l'extérieur de l'enceinte (14.1).

20. Transformateur de tension selon l'une des revendications 18 ou 19, **caractérisé en ce que** le transformateur est monophasé.

21. Transformateur de tension selon l'une des revendications 18 à 19, **caractérisé en ce que** le transformateur est multiphasé.

22. Poste électrique à isolation gazeuse, **caractérisé en ce qu'**il comporte dans une enceinte étanche (14), un circuit électrique (11) incluant au moins un transformateur de tension selon l'une des revendications 18 à 21, une partie (14.1) de l'enceinte étanche servant d'enceinte au transformateur de tension.

23. Poste électrique selon la revendication 22, **caractérisé en ce que** l'autre contact (16.1) de la paire (16) du dispositif de sectionnement est un contact fixe monté sur une cloison diélectrique (15) qui sépare la partie (14.1) de l'enceinte étanche servant d'enceinte au transformateur de tension du reste de l'enceinte étanche (14), ce contact fixe étant relié au reste du circuit électrique (11).

## Claims

1. A disconnection device designed to separate a first portion (11.1) of an electrical circuit (11) electrically from a second portion (11.2) of said circuit, the disconnection device comprising:
at least one pair of contacts (16), one of which contacts (16.2) is a moving contact, the pair of contacts having an open state and a closed state; and
a flexible conductor (21) fixed at one end to the moving contact (16.2) and serving to be fixed at the other end to one of the portions (11.1) of the electrical circuit, said disconnection device being
**characterized in that**:
the conductor comprises a flexible tube (21) that is electrically conductive, at least at its surface, and that has bending stiffness that is low enough to enable it to bend without kinking, and torsion stiffness that is high enough to enable it to take up a shape and a position that are substantially reproducible at least in the closed state.

2. A disconnection device according to claim 1, **characterized in that** the flexible tube (21) has a minimum allowable radius of curvature that is less than or equal to three times the outside diameter of the flexible tube.

3. A disconnection device according to claim 1 or claim 2, in which the moving contact (16.2) is built around a first axis, said disconnection device being **characterized in that** each end (21.1, 21.2) of the flexible tube (21) is fixed along a second axis that is substantially parallel to or that coincides with the first axis, the two second axes being offset relative to each other.

4. A disconnection device according to any one of claims 1 to 3, **characterized in that** the flexible tube (21) has a length that is greater than a distance (I) between a point at which the flexible tube (21) is fixed to the moving contact (16.2) and a point at which the flexible tube (21) is fixed to the electrical circuit portion (11.1) when the pair of contacts is in the closed state.

5. A disconnection device according to any one of claims 1 to 4, **characterized in that** the outside diameter of the flexible tube (21) lies approximately in the range 10 mm to 60 mm.

6. A disconnection device according to any one of claims 1 to 5, **characterized in that** the flexible tube (21) has a flexible tubular body (210) and an outer sheath (211) made up of interlaced wires.

7. A disconnection device according to claim 6, **characterized in that** the flexible tubular body (210) is made of metal.

8. A disconnection device according to claim 6, **characterized in that** the flexible tubular body (210) is made of a plastics material.

9. A disconnection device according to any one of claims 6 to 8, **characterized in that** the flexible body (210) is corrugated.

10. A disconnection device according to any one of claims 8 or 9, **characterized in that** the flexible body is covered with a conductive layer.

11. A disconnection device according to any one of claims 6 to 9, **characterized in that** the sheath (211) is made of metal.

12. A disconnection device according to any one of claims 1 to 11, **characterized in that** at least one of the ends (21.1, 21.2) of the flexible tube is equipped with a fixing fitting (24).

13. A disconnection device according to claim 12, **characterized in that** the fitting (24) is a screw-on fitting.

14. A disconnection device according to claim 12 or claim 13, **characterized in that** the fitting (24) is provided internally with a pivotally mounted bushing (24.2).

15. A disconnection device according to any one of claims 1 to 14, in which the moving contact (16.2) is built about an axis, said disconnection device being **characterized in that** the movement of the moving contact (16.2) is directed substantially along its axis.

16. A disconnection device according to any one of claims 1 to 14, in which the moving contact (16.2) is built about an axis, said disconnection device being **characterized in that** the movement of the moving contact is directed substantially perpendicularly to its axis.

17. A disconnection device according to claim 16, in which the moving contact is mounted on a dielectric support (25), said disconnection device being **characterized in that** the support (18) is a substantially cylindrical bar suitable for being moved along its axis.

18. A voltage transformer having at least one set (W) of windings inside an enclosure (14.1), said voltage transformer being **characterized in that** it contains a disconnection device according to any preceding claim inside the enclosure.

19. A voltage transformer according to claim 18, **characterized in that** displacement means (19) for displacing the moving contact (16.2) are accessible from the outside of the enclosure (14.1).

20. A voltage transformer according to claim 18 or claim 19, **characterized in that** the transformer is a single-phase transformer.

21. A voltage transformer according to claim 18 or claim 19, **characterized in that** the transformer is a multiphase transformer.

22. A gas-insulated electricity substation, **characterized in that**, inside a gastight enclosure (14), it has an electrical circuit (11) including at least one voltage transformer according to one of the claims 18 to 21, a portion (14.1) of the gastight enclosure serving as an enclosure for the voltage transformer.

23. A gas-insulated electricity substation according to claim 22, **characterized in that** the other contact (16.1) of the pair (16) of the disconnection device is a fixed contact mounted on a dielectric partition (15) which separates the portion (14.1) of the gastight enclosure that serves as an enclosure for the voltage transformer from the rest of the gastight enclosure (14), said fixed contact being connected to the rest of the electrical circuit (11).

## Patentansprüche

1. Trennvorrichtung zum elektrischen Trennen eines ersten Teils (11.1) von einem zweiten Teil (11.2) eines Stromkreises (11), enthaltend:
zumindest ein Paar von Kontakten (16), von denen ein Kontakt (16.2) beweglich ist, wobei dieses Paar von Kontakten entweder einen geöffneten Zustand oder einen geschlossenen Zustand hat,
und einen biegsamen Leiter (21), der auf einer Seite am beweglichen Kontakt (16.2) befestigt und dazu bestimmt ist, auf der anderen Seite an dem einen Teil (11.1) des Stromkreises befestigt zu werden,
**dadurch gekennzeichnet, dass**
der Leiter ein biegsames Rohr (21) enthält, das zumindest an der Oberfläche elektrisch leitend ist und eine Biegesteifigkeit aufweist, die gering genug ist, um sich zu krümmen, ohne dabei zusammengedrückt zu werden, sowie eine Torsionssteifigkeit, die groß genug ist, um eine Form und eine Stellung anzunehmen, die zumindest im geschlossenen Zustand im wesentlichen reproduzierbar sind.

2. Trennvorrichtung nach Anspruch 1, **dadurch gekennzeichnet, dass** das biegsame Rohr (21) einen zulässigen Mindestkrümmungsradius hat, der kleiner oder gleich dem 3-fachen Außendurchmesser des biegsamen Rohres ist.

3. Trennvorrichtung nach einem der Ansprüche 1 oder 2, wobei der bewegliche Kontakt (16.2) um eine erste Achse herum aufgebaut ist, **dadurch gekennzeichnet, dass** jedes Ende (21.1, 21.2) des biegsamen Rohrs (21) entlang einer zweiten Achse befestigt ist, die im wesentlichen parallel zur ersten Achse verläuft bzw. mit dieser zusammenfällt, wobei die beiden zweiten Achsen zueinander versetzt sind.

4. Trennvorrichtung nach einem der Ansprüche 1 bis 3, **dadurch gekennzeichnet, dass** das biegsame Rohr (21) eine Länge hat, die größer als ein Abstand (I) ist, welcher einen Befestigungspunkt des biegsamen Rohrs (21) am beweglichen Kontakt (16.2) von einem Befestigungspunkt des biegsamen Rohrs (21) an dem Stromkreisteil (11.1) trennt, wenn das Paar von Kontakten im geschlossenen Zustand ist.

5. Trennvorrichtung nach einem der Ansprüche 1 bis 4, **dadurch gekennzeichnet, dass** der Außendurchmesser des biegsamen Rohrs (21) zwischen etwa 10 und 60 mm beträgt.

6. Trennvorrichtung nach einem der Ansprüche 1 bis 5, **dadurch gekennzeichnet, dass** das biegsame Rohr (21) einen biegsamen Rohrkörper (210) und eine Außenhülle (211) aus Flechtfäden enthält.

7. Trennvorrichtung nach Anspruch 6, **dadurch gekennzeichnet, dass** der biegsame Rohrkörper (210) aus Metall besteht.

8. Trennvorrichtung nach Anspruch 6, **dadurch gekennzeichnet, dass** der biegsame Rohrkörper (210) aus Kunststoff besteht.

9. Trennvorrichtung nach einem der Ansprüche 6 bis 8, **dadurch gekennzeichnet, dass** der biegsame Körper (210) ringförmig ist.

10. Trennvorrichtung nach einem der Ansprüche 8 oder 9, **dadurch gekennzeichnet, dass** der biegsame Körper mit einer leitfähigen Schicht überzogen ist.

11. Trennvorrichtung nach einem der Ansprüche 6 bis 9, **dadurch gekennzeichnet, dass** die Hülle (211) aus Metall besteht.

12. Trennvorrichtung nach einem der Ansprüche 1 bis 11, **dadurch gekennzeichnet, dass** zumindest eines der Enden (21.2, 21.2) des biegsamen Rohrs mit einem Befestigungsanschluss (24) ausgestattet ist.

13. Trennvorrichtung nach Anspruch 12, **dadurch gekennzeichnet, dass** der Anschluss (24) ein Schraubanschluss ist.

14. Trennvorrichtung nach einem der Ansprüche 12 oder 13, **dadurch gekennzeichnet, dass** der Anschluss (24) innen eine Schwenkhülse (24.2) aufweist.

15. Trennvorrichtung nach einem der Ansprüche 1 bis 14, wobei der bewegliche Kontakt (16.2) um eine Achse herum aufgebaut ist, **dadurch gekennzeichnet, dass** die Bewegung des beweglichen Kontakts (16.2) im wesentlichen entlang seiner Achse gerichtet ist.

16. Trennvorrichtung nach einem der Ansprüche 1 bis 14, wobei der bewegliche Kontakt (16.2) um eine Achse herum aufgebaut ist, **dadurch gekennzeichnet, dass** die Bewegung des beweglichen Kontakts im wesentlichen senkrecht zu seiner Achse gerichtet ist.

17. Trennvorrichtung nach Anspruch 16, wobei der bewegliche Kontakt an einem dielektrischen Träger (25) angebracht ist, **dadurch gekennzeichnet, dass** der Träger (18) ein im wesentlichen zylindrischer Stab ist, der entlang seiner Achse verstellbar ist.

18. Spannungswandler, der in einem Gehäuse (14.1) zumindest einen Satz (W) Wicklungen aufweist, **dadurch gekennzeichnet, dass** er in dem Gehäuse eine Trennvorrichtung nach einem der vorangehenden Ansprüche enthält.

19. Spannungswandler nach Anspruch 18, **dadurch gekennzeichnet, dass** Verstellmittel (19) für den beweglichen Kontakt (16.2) von außerhalb des Gehäuses (14.1) zugänglich sind.

20. Spannungswandler nach einem der Ansprüche 18 oder 19, **dadurch gekennzeichnet, dass** der Wandler einphasig ist.

21. Spannungswandler nach einem der Ansprüche 18 bis 19, **dadurch gekennzeichnet, dass** der Wandler mehrphasig ist.

22. Gasisolierte Schaltanlage, **dadurch gekennzeichnet, dass** sie in einem dichten Gehäuse (14) einen Stromkreis (11) mit zumindest einem Spannungswandler nach einem der Ansprüche 18 bis 21 umfasst, wobei ein Teil (14.1) des dichten Gehäuses als Gehäuse für den Spannungswandler dient.

23. Schaltanlage nach Anspruch 22, **dadurch gekennzeichnet, dass** der andere Kontakt (16.1) des Kontaktpaares (16) der Trennvorrichtung ein fester Kontakt ist, der an einer dielektrischen Trennwand (15) angebracht ist, welche den Teil (14.1) des dichten Gehäuses, der als Gehäuse für den Spannungswandler dient, von dem restlichen dichten Gehäuse (14) trennt, wobei dieser feste Kontakt mit dem restlichen Stromkreis (11) verbunden ist.
